(19) Europäisches Patentamt
European Patent Office
Office européen des brevets

(11) **EP 4 696 589 A1**

(12) **EUROPEAN PATENT APPLICATION**

(43) Date of publication:
**18.02.2026 Bulletin 2026/08**

(21) Application number: **24194785.2**

(22) Date of filing: **15.08.2024**

(51) International Patent Classification (IPC):
**B62D 6/00** (2006.01)    **B62D 15/02** (2006.01)
**B62D 7/15** (2006.01)

(52) Cooperative Patent Classification (CPC):
**B62D 6/002; B62D 7/159;** B62D 6/003;
B62D 15/025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **PERSSON, Jonas**
  **412 58 GÖTEBORG (SE)**
• **LAINE, Leo**
  **414 84 GÖTEBORG (SE)**
• **RAY, Sidhant**
  **431 47 MÖLNDAL (SE)**

(74) Representative: **Ström & Gulliksson AB**
**P.O. Box 4188**
**203 13 Malmö (SE)**

(54) **STEERING ANGLE CONTROL FOR STEERED AXLES OF A VEHICLE**

(57) A computer system and computer-implemented method for determining a steering angle for a steered axle of a vehicle having two steered axles are disclosed. The computer system comprises processing circuitry configured to: acquire a desired yaw angle of the vehicle at a second location; determine a desired yaw rate for the vehicle based on the desired yaw angle and a time for the vehicle to travel from a first location to the second location; acquire a lateral distance between the first location and the second location; determine a desired lateral velocity for the vehicle based on the lateral distance and the time for the vehicle to travel from the first location to the second location; and determine a steering angle for a steered axle of the vehicle using a bicycle model and based on the determined yaw rate and the determined lateral velocity.

**FIG. 1**

# EP 4 696 589 A1

**Description**

## TECHNICAL FIELD

The disclosure relates generally to vehicle control. In particular aspects, the disclosure relates to steering angle control for steered axles of a vehicle. The disclosure can be applied to heavy-duty vehicles, such as trucks, and buses, among other vehicle types. The disclosure can be applied in construction equipment and vehicles, such as excavators, loaders, articulated haulers. Although the disclosure may be described with respect to a particular vehicle, the disclosure is not restricted to any particular vehicle.

## BACKGROUND

When controlling motion of vehicles with multiple steered axles, the steering and propulsion between axles must be coordinated to ensure safe and correct manoeuvring of the vehicle. Current approaches to multi-axle steering are often quite rudimentary, involving simple counter-steering of one axle relative to the other. For example, a rear steered axle may be provided with a steering angle that is proportional but opposite to that of a front steered axle. In other approaches, a rear steered axle may only be used for translational lateral movement, rather than used in a comprehensive steering strategy for diverse driving scenarios.

These approaches can lead to instability at high speeds or on lower friction surfaces. This is particularly relevant when operating construction vehicles such as excavators, loaders, articulated haulers and the like in such scenarios. Operation of such vehicles may therefore be unsafe when employing approaches known in the art, for example when cornering at high speed (relative for construction equipment, around 30 km/h) and/or in low friction scenarios. The freedom of movement of the vehicle is therefore limited.

It is therefore desired to develop a solution for vehicle motion management that addresses or at least mitigates some of these issues.

## SUMMARY

This disclosure provides systems, methods and other approaches for determining a steering angle for a steered axle of a vehicle having two steered axles. In particular, a desired yaw angle of the vehicle between a first location and a second location is acquired. Based on this, a desired yaw rate for the vehicle is determined. A desired lateral distance movement of the vehicle between the first location and the second location is acquired. Based on this, a desired lateral velocity for the vehicle is determined. Based on the determined yaw rate and the determined lateral velocity, a steering angle for the steered axle is determined using a bicycle model. The determined steering angle(s) can then be used in motion control of the vehicle. Setting a steering angle in this way enables increased freedom of movement of the vehicle, as yaw rate and lateral movement are disconnected. This is particularly advantageous at relatively high speeds (e.g. 30 km/h for construction equipment, but typically different based on vehicle types) and offers an improved control strategy for autonomously controlled vehicles, but also offers benefits relating to non- or semi-autonomously controlled vehicles.

According to a first aspect of the disclosure, there is provided a computer system for determining a steering angle for a steered axle of a vehicle having two steered axles, the computer system comprising processing circuitry configured to: acquire a desired yaw angle of the vehicle at a second location; determine a desired yaw rate $\omega_{z,req}$ for the vehicle based on the desired yaw angle and a time for the vehicle to travel from a first location to the second location; acquire a lateral distance between the first location and the second location; determine a desired lateral velocity $v_{y,req}$ for the vehicle based on the lateral distance and the time for the vehicle to travel from the first location to the second location; and determine a steering angle for a steered axle of the vehicle using a bicycle model and based on the desired yaw rate $\omega_{z,req}$ and the desired lateral velocity $v_{y,req}$.

The first aspect of the disclosure may seek to enable increased freedom of movement of the vehicle, as yaw rate and lateral movement of the vehicle are disconnected when setting steering angles. This is particularly advantageous at high speeds and offers an improved control strategy for autonomously controlled vehicles, but also offers benefits relating to non- or semi-autonomously controlled vehicles. The disclosed approach offers several different ways of determining the steering angles, which can be selected based on the circumstances at hand, for example available computational resources and/or a current control mode of the vehicle.

Optionally in some examples, including in at least one preferred example, the steered axle is a front steered axle or a rear steered axle of the vehicle. A technical benefit may include that a vehicle having two steered axles may be controlled in an improved manner via either of its steered axles.

Optionally in some examples, including in at least one preferred example, the processing circuitry is configured to determine the desired yaw rate $\omega_{z,req}$ and/or the desired lateral velocity $v_{y,req}$ based on steady state movement of the vehicle. A technical benefit may include that the vehicle may be controlled to operate in a stable, safe, and efficient manner.

Optionally in some examples, including in at least one preferred example, the processing circuitry is configured to: acquire a current yaw rate $\omega_z$ of the vehicle and a current lateral velocity $v_y$ of the vehicle; and determine a steering angle $\delta_f$ for a front steered axle and a steering angle $\delta_r$ for a rear steered axle to minimise a difference between the current yaw rate $\omega_z$ and the desired yaw rate $\omega_{z,req}$ and a difference between the current lateral velocity $v_y$ and the desired lateral velocity $v_{y,req}$. A technical benefit may include that steering angles for both steered axles of the vehicle can be determined accurately and with self-correction, with improved performance.

Optionally in some examples, including in at least one preferred example, the processing circuitry is configured to determine the steering angles $\delta_f$, $\delta_r$ using optimal control. A technical benefit may include flexibility, computational efficiency, and performance benefits associated with optional control.

Optionally in some examples, including in at least one preferred example, the processing circuitry is configured to: acquire a steering angle for a first steered axle of the vehicle; and determine a steering angle for the other steered axle of the vehicle according to:

$$\delta_r = \frac{m}{C_{r\alpha}}\left(\frac{v_{y,req}c_1}{v_x} + \omega_{z,req}\left(v_x + \frac{c_2}{v_x}\right) - \delta_f\frac{C_{f\alpha}}{m}\right) \qquad (a)$$

and/or

$$\delta_r = \frac{I_z}{L_r C_{r\alpha}}\left(-\frac{v_{y,req}c_3}{v_x} - \omega_{z,req}\frac{c_4}{v_x} + \delta_f\frac{L_f C_{f\alpha}}{I_z}\right) \qquad (b)$$

where $\delta_f$ is the steering angle for the front steered axle $\delta_r$ is the steering angle for the rear steered axle, $m$ is the mass of the vehicle, $v_x$ is the longitudinal velocity of the vehicle, $C_{f\alpha}$ is the cornering stiffness of the front steered axle, $C_{r\alpha}$ is the cornering stiffness of the rear steered axle, $L_f$ is the distance from the centre of gravity (CoG) of the vehicle to the front steered axle, $L_r$ is the distance from the CoG of the vehicle to the rear steered axle, $I_z$ is the yaw inertia of the vehicle, and $c_1$ to $c_4$ represent vehicle constants. A technical benefit may include that a steering angle for a second steered axle of the vehicle can be set based on a steering angle of a first steered axle of the vehicle, which enables simple implementation in existing vehicle motion control systems. This avoids any need for reconfiguration or replacement of existing motion control systems.

Optionally in some examples, including in at least one preferred example, the processing circuitry is configured to determine a first steering angle for the other steered axle according to equation (a), determine a second steering angle for the other steered axle according to equation (b), and determine a resultant steering angle $\delta_r$ for the other steered axle based on a weighted combination of the first steering angle and the second steering angle. A technical benefit may include that a balance can be provided when taking into account the lateral velocity and yaw rate of the vehicle.

Optionally in some examples, including in at least one preferred example, the processing circuitry is configured to acquire the steering angle for the first steered axle of the vehicle from an autonomous driving system of the vehicle. A technical benefit may include that a steering angle for a second steered axle of the vehicle can be determined based on an autonomously set steering angle of a first steered axle of the vehicle, enabling full autonomous control of the steering angles of vehicle.

Optionally in some examples, including in at least one preferred example, the processing circuitry is configured to determine a steering angle $\delta_f$ for a front steered axle and a steering angle $\delta_r$ for a rear steered axle, according to:

$$\delta_r = \frac{m}{C_{r\alpha}}\left(\frac{v_{y,req}c_1}{v_x} + \omega_{z,req}\left(v_x + \frac{c_2}{v_x}\right) - \delta_f\frac{C_{f\alpha}}{m}\right)$$

$$\delta_r = \frac{I_z}{L_r C_{r\alpha}}\left(-\frac{v_{y,req}c_3}{v_x} - \omega_{z,req}\frac{c_4}{v_x} + \delta_f\frac{L_f C_{f\alpha}}{I_z}\right)$$

where $m$ is the mass of the vehicle, $v_x$ is the longitudinal velocity of the vehicle, $C_{f\alpha}$ is the cornering stiffness of the front steered axle, $C_{r\alpha}$ is the cornering stiffness of the rear steered axle, $L_f$ is the distance from the centre of gravity (CoG) of the vehicle to the front steered axle, $L_r$ is the distance from the CoG of the vehicle to the rear steered axle, $I_z$ is the yaw inertia of the vehicle, and $c_1$ to $c_4$ represent vehicle constants. A technical benefit may include that steering angles can be determined without the need for feedback control, enabling offline testing of the solution, predictable performance, and increased safety.

Optionally in some examples, including in at least one preferred example, the processing circuitry is configured to determine the steering angles $\delta_f$, $\delta_r$ offline using a feedforward controller. A technical benefit may include disturbance compensation and response time benefits associated with feedforward control,

Optionally in some examples, including in at least one preferred example, the processing circuitry is configured to transmit the determined steering angle to a controller of the vehicle configured to control the steering angle of the steered axle. A technical benefit may include that the vehicle may be controlled using existing control interfaces to provide increased freedom of movement.

According to a second aspect of the disclosure, there is provided a vehicle comprising the computer system of the first aspect. The second aspect of the disclosure may seek to provide a vehicle capable having increased freedom of movement, as yaw rate and lateral movement of the vehicle are disconnected when setting steering angles. This is particularly advantageous at high speeds and offers an improved control strategy for autonomously controlled vehicles.

According to a third aspect of the disclosure, there is provided a computer-implemented method for determining a steering angle for a steered axle of a vehicle having two steered axles, the computer-implemented method comprising: acquiring, by processing circuitry of a computer system, a desired yaw angle of the vehicle at a second location; determining, by the processing circuitry, a desired yaw rate $\omega_{z,req}$ for the vehicle based on the desired yaw angle and a time for the vehicle to travel from a first location to the second location; acquiring, by the processing circuitry, a lateral distance between the first location and the second location; determining, by the processing circuitry, a desired lateral velocity $v_{y,req}$ for the vehicle based on the lateral distance and the time for the vehicle to travel from the first location to the second location; and determining, by the processing circuitry, a steering angle for a steered axle of the vehicle using a bicycle model and based on the desired yaw rate $\omega_{z,req}$ and the desired lateral velocity $v_{y,req}$.

The third aspect of the disclosure may seek to enable increased freedom of movement of the vehicle, as yaw rate and lateral movement of the vehicle are disconnected when setting steering angles. This is particularly advantageous at high speeds and offers an improved control strategy for autonomously controlled vehicles, but also offers benefits relating to non- or semi-autonomously controlled vehicles. The disclosed approach offers several different ways of determining the steering angles, which can be selected based on the circumstances at hand, for example available computational resources and/or a current control mode of the vehicle.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to have increased freedom of movement, as yaw rate and lateral movement of the vehicle are disconnected when setting steering angles. This is particularly advantageous at high speeds and offers an improved control strategy for autonomously controlled vehicles, but also offers benefits relating to non- or semi-autonomously controlled vehicles.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to have increased freedom of movement, as yaw rate and lateral movement of the vehicle are disconnected when setting steering angles. This is particularly advantageous at high speeds and offers an improved control strategy for autonomously controlled vehicles, but also offers benefits relating to non- or semi-autonomously controlled vehicles.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically shows a vehicle having two steered axles according to an example.
**FIG. 2A** illustrates a path between two locations for a vehicle according to an example.
**FIG. 2B** illustrates a path between two locations for a vehicle according to another example.
**FIG. 3** is a flow chart of a computer-implemented method according to an example.
**FIG. 4** is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

When controlling motion of vehicles with multiple steered axles, the steering between axles must be coordinated to ensure safe and correct manoeuvring of the vehicle. Current approaches to multi-axle steering are often quite rudimentary and can lead to instability at high speeds or on lower friction surfaces. This is particularly relevant when operating construction vehicles such as excavators, loaders, articulated haulers and the like in such scenarios. Operation of such vehicles may therefore be unsafe when employing approaches known in the art, for example when cornering at high speed (relative for construction equipment, around 30 km/h) and/or in low friction scenarios.

To remedy this, systems, methods and other approaches are provided herein for determining a steering angle for a steered axle of a vehicle having two steered axles. In particular, a desired yaw angle of the vehicle at a second location is acquired. Based on this, a desired yaw rate for the vehicle is determined. A desired lateral distance movement of the vehicle between a first location and the second location is acquired. Based on this, a desired lateral velocity for the vehicle is determined. Based on the determined yaw rate and the determined lateral velocity, a steering angle for the steered axle is determined using a bicycle model. The determined steering angle(s) can then be used in motion control of the vehicle. Setting a steering angle in this way enables increased freedom of movement of the vehicle, as yaw rate and lateral movement are disconnected. This is particularly advantageous at high speeds and offers an improved control strategy for autonomously controlled vehicles, but also offers benefits relating to non- or semi-autonomously controlled vehicles.

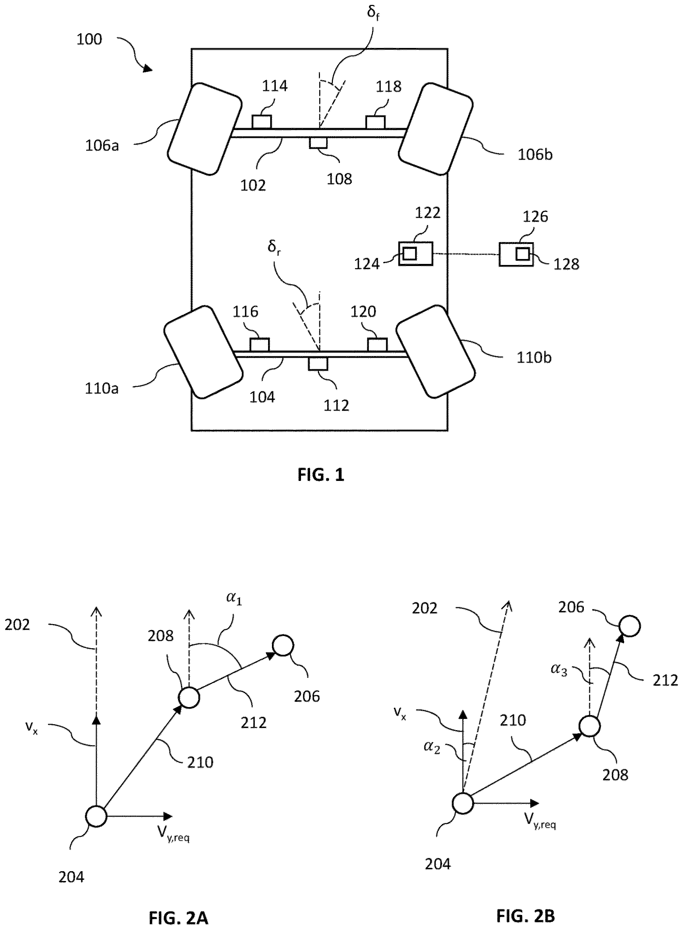

**FIG. 1** schematically shows a vehicle **100** having two steered axles **102, 104.** The front steered axle **102** has respective left and right wheels **106a, 106b.** A steering angle $\delta_f$ of the front steered axle **102** and its wheels **106a, 106b** is controlled by a front steering actuator **108.** The rear steered axle **104** has respective left and right wheels **110a, 110b.** A steering angle $\delta_r$ of the rear steered axle **104** and its wheels **110a, 110b** is controlled by a rear steering actuator **112.** The vehicle **100** may be any suitable vehicle known in the art having two steered axles (each axle including any suitable number of wheels), including heavy-duty vehicles, such as trucks, and buses, among other vehicle types. In some examples, the vehicle **100** may be a construction vehicle, for example any vehicle suitable for transporting bulk material from one location to another. For example, the vehicle **100** may be an excavator, loader, articulated hauler, dump truck, or any other suitable construction vehicle known in the art. Whilst two steered axles **102, 104** are shown, it will be appreciated that further non-steered axles may be provided on the vehicle **100** as appropriate.

The vehicle **100** may also comprise one or more propulsion systems **114, 116** configured to drive, e.g. provide torque and/or steering to, one or more axles **102, 104** or individual wheels **106, 110** of the vehicle **100.** The propulsion systems **114, 116** may include one or more electrical machines such as electric motors, which may be able to supply either a positive (propulsion) or negative (braking) force or torque. In the example of **FIG. 1,** each steered axle **102, 104** has a respective propulsion system **114, 116.** As such, the steered axles **102, 104** are both driven axles. It will also be appreciated that any number of the steered axles **102, 104** and/or further axles may be driven axles. For example, in some implementations, only one of the steered axles **102, 104** may be driven. In some examples, a third axle (not shown) may be a driven axle while the steered axles **102, 104** are not driven. In some examples, the individual wheels **106, 110** may have respective propulsion systems. In some examples, the vehicle **100** may also include another source of propulsion, for example an internal combustion engine (ICE). The vehicle **100** also comprises a drivetrain (not shown) to deliver mechanical power from the propulsion source (the electrical machines or the ICE) to the wheels **106, 110.**

The vehicle **100** may also comprise one or more brake systems **118, 120,** for example one or more sets of service brakes, configured to supply a negative (braking) force. The service brakes may be, for example, frictional brakes such as pneumatic brakes. The steering actuators **108, 112,** propulsion systems **114, 116,** and brake systems **118, 120** may be collectively referred to as motions support devices (MSDs) of the vehicle **100.**

In some examples, the vehicle **100** may be controlled (driven) by an on-board operator (driver). For example, the operator may provide an input to a steering wheel and/or accelerator/brake pedal of the vehicle **100** related to a manoeuvre, for example indicating a desired change of direction and/or speed of the vehicle **100.** In other examples, the vehicle **100** may be an autonomous vehicle that is controlled by a vehicle motion management (VMM) unit **122** comprising processing circuitry **124** configured to control motion of the vehicle **100** via the MSDs of the vehicle **100.** In some examples, the vehicle **100** may be capable of being controlled by an on-board or remote operator and/or the VMM unit **122,** in what may be termed a semi-autonomous driving scenario.

The VMM unit **122** may be configured to provide control signals to each of the MSDs of the vehicle **100.** To this end, the VMM unit **122** may be communicatively coupled to the steering actuators **108, 112,** propulsion systems **114, 116,** and/or brake systems **118, 120.** In some examples, the VMM unit **122** may be configured to provide a force, torque, and or longitudinal slip request to the propulsion systems **114, 116** and/or brake systems **118, 120,** and/or a steering angle request to each of the steering actuators **108, 112.** In a common driving scenario, a steering angle request may involve simple counter-steering of the steered axles **102, 104,** where a requested steering angle for the rear steered axle **104** is proportional (for example equal) but opposite to that of the front steered axle **102. FIG. 1** shows a single VMM unit **122** for all MSDs of the vehicle **100,** however it will be appreciated that each MSD may comprise a dedicated controller. The VMM unit **122** may be a microcontroller.

In some examples, the VMM unit **122** may determine the control signals itself, for example based on a predetermined mission plan or based on an input from an on-board operator. In some examples, the VMM unit **122** may receive control signals from a computer system **126** comprising processing circuitry **128.** The computer system **126** is communicatively coupled to the VMM unit **122.** The computer system **126** may be a vehicle control unit configured to perform various vehicle control functions, such as vehicle motion management. The computer system **126** may be local to the vehicle **100,** or may be a remote system, implemented at a distance from the vehicle **100,** e.g. a cloud server for remote control of the vehicle **100.**

A communicative coupling as referred to above may be implemented in any suitable way, for example via a circuit or any other wired, wireless, or network connection known in the art. Furthermore, a communicative coupling may be implemented as a direct connection, e.g. between the VMM unit **122** and the computer system **126,** or as a connection via one or more intermediate entities.

One function of the VMM unit **122** and the computer system **126** is to provide control inputs for the MSDs of the vehicle **100** to enable motion of the vehicle **100,** for example including straight-line driving, cornering, braking and the like. The implemented motion should be safe, stable, and enable sufficient freedom of movement of the vehicle **100.** To this end, a number of principles of motion for the vehicle **100** can be considered.

When a vehicle is travelling from one location to another including some lateral movement, there are two factors that are important: yaw rate and lateral velocity. The yaw rate is the angular velocity of lateral rotation of the vehicle, while the lateral velocity is the velocity at which the vehicle travels in the lateral direction. A yaw angle of the vehicle may also be important. For example, in a longer curve (e.g. 90°), it may be acceptable or even desired for the vehicle to have a certain yaw angle. In a lane change, for example on a high speed road, it may be desired that the yaw angle remains substantially constant, e.g. close to zero. **FIGs. 2A** and **2B** illustrate examples of a path for a vehicle, such as the vehicle **100,** from one location to another. The path may contain a number of locations the vehicle is intended to pass through.

**FIG. 2A** is an example of a vehicle travelling a longer curve. In the example of **FIG. 2A,** a vehicle facing and travelling in a direction **202** and having a longitudinal velocity $v_x$ may travel from a first location **204** to a second location **206** via an intermediate location **208.** A first path **210** is defined between the first location **204** and the intermediate location **208.** A second path **212** defined between the intermediate location **208** and the second location **206.** It is desired for the vehicle to have a yaw angle $\alpha_1$ when it reaches the second location **206.** To travel from the first location **204** to the location **206,** the vehicle requires a lateral velocity $v_{y,req}$.

**FIG. 2B** is an example of a vehicle making a lane change. In this example, a vehicle is facing and travelling in a direction **202,** and has an initial yaw angle $\alpha_2$ and a longitudinal velocity $v_x$. The vehicle may travel from a first location **204** to a second location **206** via an intermediate location **208.** A first path **210** is defined between the first location **204** and the intermediate location **208.** A second path **212** defined between the intermediate location **208** and the second location **206.** It is desired for the vehicle to have a yaw angle $\alpha_3$ when it reaches the second location **206.** To travel from the first location **204** to the second location **206,** the vehicle requires a lateral velocity $v_{y,req}$.

For a vehicle having two steered axles, such as the vehicle **100,** yaw rate and lateral velocity can be decoupled in a way that is not possible for vehicles having a single steered axle. A relation between yaw rate $\omega_z$, yaw acceleration $\dot{\omega}_z$, lateral velocity $v_y$, lateral acceleration $\dot{v}_y$, longitudinal velocity $v_x$, and the steering angles $\delta_f, \delta_r$ for such a vehicle can be described using a bicycle model, for example as follows:

$$\begin{bmatrix} \dot{v}_y \\ \dot{\omega}_z \end{bmatrix} = A \begin{bmatrix} v_y \\ \omega_z \end{bmatrix} + B \begin{bmatrix} \delta_f \\ \delta_r \end{bmatrix} \tag{1}$$

$$A = - \begin{bmatrix} \dfrac{C_{f\alpha} + C_{r\alpha}}{mv_x} & v_x + \dfrac{L_f C_{f\alpha} - L_r C_{r\alpha}}{mv_x} \\ \dfrac{L_f C_{f\alpha} - L_r C_{r\alpha}}{I_z v_x} & \dfrac{L_f{}^2 C_{f\alpha} - L_r{}^2 C_{r\alpha}}{I_z v_x} \end{bmatrix}$$

$$B = \begin{bmatrix} \dfrac{C_{f\alpha}}{m} & \dfrac{C_{r\alpha}}{m} \\ \dfrac{L_f C_{f\alpha}}{I_z} & -\dfrac{L_r C_{r\alpha}}{I_z} \end{bmatrix}$$

where $C_{f\alpha}$ is the cornering stiffness of the front steered axle **102**, $C_{r\alpha}$ is the cornering stiffness of the rear steered axle **104**, $m$ is the mass of the vehicle **100**, $L_f$ is the distance from the centre of gravity (CoG) of the vehicle **100** to the front steered axle **102**, $L_r$ is the distance from the CoG of the vehicle **100** to the rear steered axle **104**, and $I_z$ is the yaw inertia of the vehicle **100**. The cornering stiffnesses $C_{f\alpha}$, $C_{r\alpha}$ may be determined from tyre properties of the vehicle **100**. The longitudinal velocity $v_x$ of the vehicle **100** may be a current value determined in any suitable manner known in the art, for example using speed sensors of the vehicle **100**, or a desired value.

By using this relation and knowledge of the locations along a path the vehicle is intended to pass through, it is possible to calculate the required yaw rate $\omega_{z,req}$ and lateral velocity $v_{y,req}$ of the vehicle. Taking the examples of **FIGs. 2A** and **2B**, given a certain longitudinal velocity $v_x$ and knowledge of the longitudinal distance between the first location **204** and the second location **206**, the time $t$ taken to travel longitudinally from the first location **204** to the second location **206** can be determined. Based on this, and given a steady state in which $\dot{\omega}_z = 0$ and $\dot{v}_y = 0$, the required yaw rate $\omega_{z,req}$ and lateral velocity $v_{y,req}$ of the vehicle 100 can be determined as follows:

$$\omega_{z,req} = \frac{\Delta\alpha}{t} \tag{2}$$

$$v_{y,req} = \frac{\Delta y}{t} \tag{3}$$

where $\Delta\alpha$ is the required change in yaw angle $\alpha$ (i.e. $\alpha_1$ in **FIG. 2A** and $\alpha_3 - \alpha_2$ in **FIG. 2B**) and $\Delta y$ is the lateral distance between the first location **204** and the second location **206**. It is noted that the steady state assumption mentioned above is particularly useful in certain scenarios, for example a lane change. However, the time $t$ taken to travel longitudinally from the first location **204** to the second location **206** can be determined in any suitable way, for example using an estimated, expected, or desired time.

This can then be used to calculate the required steering angles $\delta_f$, $\delta_r$ using the relation in equation (1) based on desired values of yaw acceleration $\dot{\omega}_z$ and lateral acceleration $\dot{v}_y$. Given a steady state, where $\dot{\omega}_z = 0$ and $\dot{v}_y = 0$, this can be expressed as follows:

$$\begin{bmatrix} \dfrac{v_{y,req}c_1}{v_x} & \omega_{z,req}\left(v_x + \dfrac{c_2}{v_x}\right) \\ \dfrac{v_{y,req}c_3}{v_x} & \omega_{z,req}\dfrac{c_4}{v_x} \end{bmatrix} = B \begin{bmatrix} \delta_f \\ \delta_r \end{bmatrix} \tag{4}$$

$$c_1 = \frac{C_{af} + C_{ar}}{m}$$

$$c_2 = \frac{L_f C_{af} - L_r C_{ar}}{m}$$

$$c_3 = \frac{L_f C_{af} - L_r C_{ar}}{I_z}$$

$$c_4 = \frac{L_f^2 C_{af} - L_r^2 C_{ar}}{I_z}$$

where $c_1$ to $c_4$ represent vehicle constants and can be measured or calculated as appropriate.

This yields an equation system with two unknowns, the required steering angles $\delta_f$, $\delta_r$, as follows:

$$\frac{v_{y,req}c_1}{v_x} + \omega_{z,req}\left(v_x + \frac{c_2}{v_x}\right) = \delta_f \frac{C_{f\alpha}}{m} + \delta_r \frac{C_{r\alpha}}{m} \tag{5}$$

$$\frac{v_{y,req}c_3}{v_x} + \omega_{z,req}\frac{c_4}{v_x} = \delta_f \frac{L_f C_{f\alpha}}{I_z} - \delta_r \frac{L_r C_{r\alpha}}{I_z} \tag{6}$$

An example relation can then be set as follows:

$$\delta_r = \frac{m}{C_{r\alpha}}\left(\frac{v_{y,req}c_1}{v_x} + \omega_{z,req}\left(v_x + \frac{c_2}{v_x}\right) - \delta_f \frac{C_{f\alpha}}{m}\right) \tag{7}$$

$$\delta_r = \frac{I_z}{L_r C_{r\alpha}}\left(-\frac{v_{y,req}c_3}{v_x} - \omega_{z,req}\frac{c_4}{v_x} + \delta_f \frac{L_f C_{f\alpha}}{I_z}\right) \tag{8}$$

In this case, the steering angle $\delta_r$ of the rear steered axle **104** can be set based on the steering angle $\delta_f$ of the front steered axle **102,** or vice versa.

The system of equations outlined above can be used in three different ways to determine the steering angles $\delta_f, \delta_r$ for the steered axles **102, 104.**

1. Solving equations (7) and (8) to determine the steering angles $\delta_f, \delta_r$ offline, for example using a feedforward controller.
2. Using a path-following controller based on equation (1), using the required yaw rate $\omega_{z,req}$ and lateral velocity $v_{y,req}$ of the vehicle **100** as reference targets, to determine the steering angles $\delta_f, \delta_r$ online.
3. Receiving the steering angle for a first steered axle online, for example from an autonomous driving system, and determining the steering angle for the other steered axle based on equation (7) and/or (8).

In the first approach, the steering angles $\delta_f, \delta_r$ can be determined by solving equations (7) and (8). This can be achieved, for example, using a feedforward controller. A feedforward controller is a type of control system that uses a model to predict a control action needed to achieve a desired output. Feedforward controllers anticipate changes and act pre-emptively to correct disturbances.

In the second approach, a path-following controller is used to determine the steering angles $\delta_f, \delta_r$. A path-following controller is a type of control system designed to ensure that a vehicle a predefined path accurately. The main goal of a path-following controller is to minimize the deviation between the actual path and the desired path. In this approach, the "path" is set by the requested yaw rate $\omega_{z,req}$ and lateral velocity $v_{y,req}$, and the controller attempts to ensure the vehicle **100** meets these values as closely as possible through a linear quadratic regulator or similar. The controller may be an optimal controller such as a model predictive controller (MPC) or a linear-quadratic-Gaussian (LQR) controller as known in the art.

The controller may acquire a current yaw rate $\omega_z$ and lateral velocity $v_y$. These may be determined in any suitable manner known in the art, for example using appropriate sensors of the vehicle **100.** The current value(s) $\omega_z, v_y$ may then be compared to the respective required value(s) $\omega_{z,req}, v_{y,req}$, to determine a difference between them. A cost function can be formulated as follows:

$$\dot{x} = Ax + B\boldsymbol{u} \tag{9}$$

$$x = [\omega_z - \omega_{z,req} \quad v_y - v_{y,req}]$$

$$\boldsymbol{u} = [\delta_f \quad \delta_r]$$

where $A$ and $B$ are as defined in equation (1). This cost function can be solved by the controller to provide a gain matrix $K$, where:

$$u = -Kx \tag{9}$$

As the system is linear, the optimal control action $\boldsymbol{u}$ can be calculated by minimising the control input and the error between the desired states and the current states of the vehicle. The output $\boldsymbol{u}$ then describes the steering angles $\delta_f, \delta_r$. This approach can be performed online, and provides correction in the case of any parameter errors as well as a more dynamic controller.

In the third approach, a steering angle for a first axle is acquired from some input and a steering angle for the other axle is determined using equation (7) and/or (8). For example, a steering angle $\delta_f$ for the front steered axle **102** may be acquired, for example received from an operator input to a steering wheel or an automated driving system such as the VMM unit 122 or computer system **126.** This may be inserted into equation (7) and/or (8) to provide the steering angle $\delta_r$ for the rear steered axle **104.** This can be performed in a manner such that the steering angle $\delta_r$ for the rear steered axle **104** is implemented at some time in the future (e.g. a few seconds) based on the longitudinal velocity. This approach can be used offline, whereby a lookup table of values for the various parameters can be constructed and used to determine an appropriate steering angle $\delta_r$ for the rear steered axle **104** in a given situation. This allows the steering angle $\delta_f$ for the front steered axle **102** to be controlled with feedback through an autonomous driving system such as the VMM unit **122** or the computer system **126,** while the intended vehicle movement is supported by the steering angle $\delta_r$ for the rear steered axle **104.** When less yaw moment is required, which is normally the case at higher speeds, this approach allows the rear steered axle **104** to either counter-steer less or steer parallel to the front steered axle **102,** increasing stability. Alternatively, the steering angle $\delta_r$ for the rear steered axle **104** may be acquired, for example received from an operator input to a steering wheel or an automated driving system, and inserted into equation (7) and/or (8) to provide a steering angle $\delta_f$ for the front steered axle **102** in a similar fashion.

Equation (7) is based primarily on the lateral velocity, while equation (8) is based primarily on the yaw rate. These equations may provide different results for the steering angle $\delta_r$ for the rear steered axle **104.** Therefore, it may be desired to balance between the two equations. This can be achieved, for example, using an iterative weighting process where the solution for each equation is weighted to provide an intermediate value. In some examples, the solution for equation (7) may be weighted more heavily than the solution for equation (8) due to the importance of the lateral velocity.

Setting steering angles in this way enables increased freedom of movement of the vehicle, as yaw rate and lateral movement of the vehicle are disconnected. This is particularly advantageous at high speeds and offers an improved control strategy for autonomously controlled vehicles. The disclosed approach offers several different ways of determining the steering angles, which can be selected based on the circumstances at hand, for example available computational resources and/or a current control mode of the vehicle.

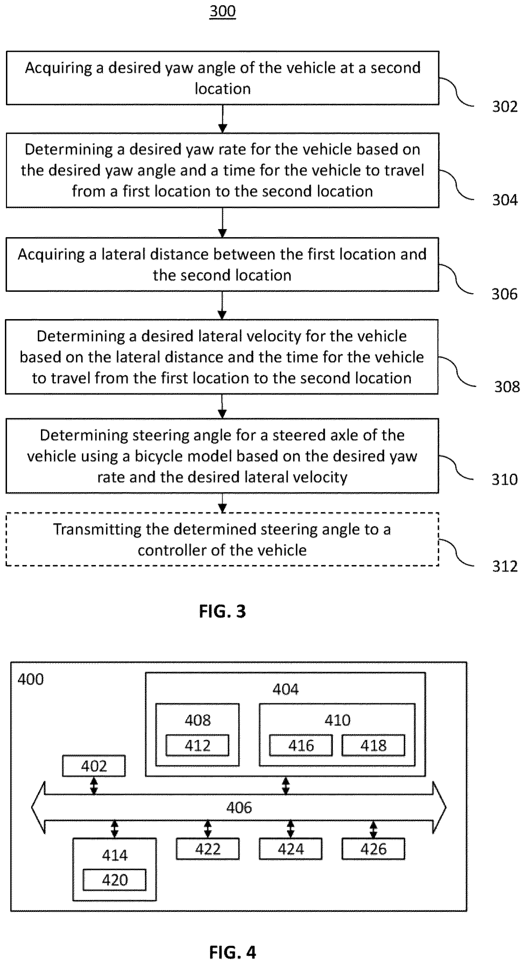

**FIG. 3** is a flow chart of a computer-implemented method **300** according to an example. The method **300** is for determining a steering angle for a steered axle of a vehicle having two steered axles, such as the vehicle **100.** The method **300** enables increased freedom of movement of the vehicle, as yaw rate and lateral movement are disconnected. This is particularly advantageous at high speeds and offers an improved control strategy for autonomously controlled vehicles. The method **300** may be implemented by processing circuitry of a computer system (e.g., the processing circuitry **124** of the VMM unit **122,** or the processing circuitry **128** of the computer system **126** described in relation to **FIG. 1**).

At **302,** a desired yaw angle $\alpha$ of the vehicle **100** at a second (e.g. future) location is acquired. This may be acquired based on a known route or path for the vehicle **100,** or may be determined online based on an updated route or path. The desired yaw angle $\alpha$ may be used to determine a required change in yaw angle $\Delta\alpha$ based on the current heading of the vehicle **100,** for example by comparing the desired yaw angle $\alpha$ to a current yaw angle of the vehicle **100.**

At **304,** a desired yaw rate $\omega_{z,req}$ for the vehicle **100** is determined based on the desired yaw angle $\alpha$ acquired at **302** and a time $t$ for the vehicle **100** to travel from a first (e.g. current) location to the second location. The time $t$ can be determined, for example, based on a current or desired longitudinal velocity $v_x$ for the vehicle **100** and the longitudinal distance between the first and second locations, or using an estimated, expected, or desired time. Given a steady state in which $\dot{\omega}_z = 0$, the desired yaw rate $\omega_{z,req}$ can be determined based on equation (2).

At **306,** a lateral distance between the first location and the second location is acquired. This may be acquired based on a known route or path for the vehicle **100,** or may be determined online based on an updated route or path.

At **308,** a desired lateral velocity $v_{y,req}$ for the vehicle **100** is determined based on the lateral distance acquired at **306** and the time $t$. Given a steady state in which $\dot{v}_y = 0$, the desired lateral velocity $v_{y,req}$ can be determined based on equation (3).

At **310,** a steering angle $\delta_f$, $\delta_r$ for a steered axle **102, 104** of the vehicle **100** is determined using a bicycle model based on the desired yaw rate $\omega_{z,req}$ determined at **306** and the desired lateral velocity $v_{y,req}$ determined at **308.** As discussed above, this may be determined in one of three ways:

1. Solving equations (7) and (8) to determine the steering angles $\delta_f$, $\delta_r$ offline, for example using a feedforward controller.
2. Using a path-following controller based on equation (1), using the required yaw rate $\omega_{z,req}$ and lateral velocity $v_{y,req}$ of the vehicle **100** as reference targets, to determine the steering angles $\delta_f$, $\delta_r$ online.
3. Receiving a steering angle for a first axle (e.g. the steering angle $\delta_f$ for the front steered axle **102**) online, for example from an autonomous driving system, and determining the steering angle for the other axle (e.g. the steering angle $\delta_r$ for the rear steered axle **104**) based on equation (7) and/or (8).

At **312,** the determined steering angle(s) $\delta_f$, $\delta_r$ may be transmitted to a controller of the vehicle **100** configured to control one or more motion parameters of the steered axle(s) **102, 104.** For example, if the method **300** is performed at the computer system **126,** the determined steering angle(s) $\delta_f$, $\delta_r$ may be transmitted to the VMM unit **122.** The determined steering angle(s) $\delta_f$, $\delta_r$ may then be transmitted to steering actuator **108, 112** of the appropriate steered axle **102, 104.** This can be implemented in a simple manner using existing control interfaces of the vehicle **100.**

FIG. 4 is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (122, 126, 400) for determining a steering angle for a steered axle (102, 104) of a vehicle (100) having two steered axles (102, 104), the computer system (122, 126, 400) comprising processing circuitry (124, 128, 402) configured to: acquire a desired yaw angle of the vehicle (100) at a second location (206); determine a desired yaw rate $\omega_{z,req}$ for the vehicle (100) based on the desired yaw angle and a time for the vehicle (100) to travel from a first location (204) to the second location (206); acquire a lateral distance between the first location (204) and the second location (206); determine a desired lateral velocity $v_{y,req}$ for the vehicle (100) based on the lateral distance and the time for the vehicle (100) to travel from the first location (204) to the second location (206); and determine a steering angle for a steered axle (102, 104) of the vehicle (100) using a bicycle model and based on the desired yaw rate $\omega_{z,req}$ and the desired lateral velocity $v_{y,req}$.

Example 2: The computer system (122, 126, 400) of example 1, wherein the steered axle (102, 104) is a front steered axle (102) or a rear steered axle (104) of the vehicle (100).

Example 3: The computer system (122, 126, 400) of example 1 or 2, wherein the processing circuitry (124, 128, 402) is configured to determine the desired yaw rate $\omega_{z,req}$ and/or the desired lateral velocity $v_{y,req}$ based on steady state movement of the vehicle (100).

Example 4: The computer system (122, 126, 400) of any preceding example, wherein the processing circuitry (124, 128, 402) is configured to: acquire a current yaw rate $\omega_z$ of the vehicle (100) and a current lateral velocity $v_y$ of the vehicle (100); and determine a steering angle $\delta_f$ for a front steered axle (102) and a steering angle $\delta_r$ for a rear steered axle (104) to minimise a difference between the current yaw rate $\omega_z$ and the desired yaw rate $\omega_{z,req}$ and a difference between the current lateral velocity $v_y$ and the desired lateral velocity $v_{y,req}$.

Example 5: The computer system (122, 126, 400) of example 4, wherein the processing circuitry (124, 128, 402) is configured to determine the steering angles $\delta_f$, $\delta_r$ using optimal control.

Example 6: The computer system (122, 126, 400) of any of examples 1 to 3, wherein the processing circuitry (124, 128, 402) is configured to: acquire a steering angle for a first steered axle (102, 104) of the vehicle (100); and determine a steering angle for the other steered axle (102, 104) of the vehicle (100) according to:

$$\delta_r = \frac{m}{C_{r\alpha}} \left( \frac{v_{y,req} c_1}{v_x} + \omega_{z,req} \left( v_x + \frac{c_2}{v_x} \right) - \delta_f \frac{C_{f\alpha}}{m} \right) \qquad \text{(a)}$$

and/or

$$\delta_r = \frac{I_z}{L_r C_{r\alpha}} \left( -\frac{v_{y,req} c_3}{v_x} - \omega_{z,req} \frac{c_4}{v_x} + \delta_f \frac{L_f C_{f\alpha}}{I_z} \right) \qquad \text{(b)}$$

where $\delta_f$ is the steering angle for the front steered axle (102) $\delta_r$ is the steering angle for the rear steered axle (104), $m$ is the mass of the vehicle (100), $v_x$ is the longitudinal velocity of the vehicle (100), $C_{f\alpha}$ is the cornering stiffness of the front steered axle (102), $C_{r\alpha}$ is the cornering stiffness of the rear steered axle (104), $L_f$ is the distance from the centre of gravity "CoG" of the vehicle (100) to the front steered axle (102), $L_r$ is the distance from the CoG of the vehicle (100) to the rear steered axle (104), $I_z$ is the yaw inertia of the vehicle (100), and $c_1$ to $c_4$ represent vehicle constants.

Example 7: The computer system (122, 126, 400) of example 6, wherein the processing circuitry (124, 128, 402) is configured to determine a first steering angle for the other steered axle (102, 104) according to equation (a), acquire a second steering angle for the other steered axle (102, 104) according to equation (b), and determine a resultant steering angle $\delta_r$ for the other steered axle (102, 104) based on a weighted combination of the first steering angle and the second steering angle.

Example 8: The computer system (122, 126, 400) of example 6 or 7, wherein the processing circuitry (124, 128, 402) is configured to acquire the steering angle for the first steered axle (102, 104) of the vehicle (100) from an autonomous driving system (122, 126) of the vehicle (100).

Example 9: The computer system (122, 126, 400) of any of examples 1 to 3, wherein the processing circuitry (124, 128, 402) is configured to determine a steering angle $\delta_f$ for a front steered axle (102) and a steering angle $\delta_r$ for a rear steered axle (104), according to:

$$\delta_r = \frac{m}{C_{r\alpha}}\left(\frac{v_{y,req}c_1}{v_x} + \omega_{z,req}\left(v_x + \frac{c_2}{v_x}\right) - \delta_f \frac{C_{f\alpha}}{m}\right)$$

$$\delta_r = \frac{I_z}{L_r C_{r\alpha}}\left(-\frac{v_{y,req}c_3}{v_x} - \omega_{z,req}\frac{c_4}{v_x} + \delta_f \frac{L_f C_{f\alpha}}{I_z}\right)$$

where m is the mass of the vehicle (100), $v_x$ is the longitudinal velocity of the vehicle (100), $C_{f\alpha}$ is the cornering stiffness of the front steered axle (102), $C_{r\alpha}$ is the cornering stiffness of the rear steered axle (104), $L_f$ is the distance from the centre of gravity "CoG" of the vehicle (100) to the front steered axle (102), $L_r$ is the distance from the CoG of the vehicle (100) to the rear steered axle (104), $I_z$ is the yaw inertia of the vehicle (100), and $c_1$ to $c_4$ represent vehicle constants.

Example 10: The computer system (122, 126, 400) of example 9, wherein the processing circuitry (124, 128, 402) is configured to determine the steering angles $\delta_f$, $\delta_r$ offline using a feedforward controller.

Example 11: The computer system (122, 126, 400) of any preceding example, wherein the processing circuitry (124, 128, 402) is configured to transmit the determined steering angle to a controller (122, 126) of the vehicle (100) configured to control the steering angle of the steered axle (102, 104).

Example 12: A vehicle (100) comprising the computer system (122, 126, 400) of any preceding example.

Example 13: A computer-implemented method (300) for determining a steering angle for a steered axle (102, 104) of a vehicle (100) having two steered axles (102, 104), the computer-implemented method (300) comprising: acquiring (302), by processing circuitry (124, 128, 402) of a computer system (122, 126, 400), a desired yaw angle of the vehicle (100) at a second location (206); determining (304), by the processing circuitry (124, 128, 402), a desired yaw rate $\omega_{z,req}$ for the vehicle (100) based on the desired yaw angle and a time for the vehicle (100) to travel from a first location (204) to the second location (206); acquiring (306), by the processing circuitry (124, 128, 402), a lateral distance between the first location (204) and the second location (206); determining (308), by the processing circuitry (124, 128, 402), a desired lateral velocity $v_{y,req}$ for the vehicle (100) based on the lateral distance and the time for the vehicle (100) to travel from the first location (204) to the second location (206); and determining (310), by the processing circuitry (124, 128, 402), a steering angle for a steered axle (102, 104) of the vehicle (100) using a bicycle model and based on the desired yaw rate $\omega_{z,req}$ and the desired lateral velocity $v_{y,req}$.

Example 14: The computer-implemented method (300) of example 13, wherein the steered axle (102, 104) is a front steered axle (102) or a rear steered axle (104) of the vehicle (100).

Example 15: The computer-implemented method (300) of example 13 or 14, comprising determining, by the processing circuitry (124, 128, 402), the desired yaw rate $\omega_{z,req}$ and/or the desired lateral velocity $v_{y,req}$ based on steady state movement of the vehicle (100).

Example 16: The computer-implemented method (300) of any of examples 13 to 15, comprising: acquiring, by the processing circuitry (124, 128, 402), a current yaw rate $\omega_z$ of the vehicle (100) and a current lateral velocity $v_y$ of the vehicle (100); and determining (310), by the processing circuitry (124, 128, 402), a steering angle $\delta_f$ for a front steered axle (102) and a steering angle $\delta_r$ for a rear steered axle (104) to minimise a difference between the current yaw rate $\omega_z$ and the desired yaw rate $\omega_{z,req}$ and a difference between the current lateral velocity $v_y$ and the desired lateral velocity $v_{y,req}$.

Example 17: The computer-implemented method (300) of example 16, comprising determining (310), by the processing circuitry (124, 128, 402), the steering angles $\delta_f$, $\delta_r$ using optimal control.

Example 18: The computer-implemented method (300) of any of examples 13 to 15, comprising: acquiring, by the processing circuitry (124, 128, 402), a steering angle for a first steered axle (102, 104) of the vehicle (100); and determining (310), by the processing circuitry (124, 128, 402), a steering angle for the other steered axle (102, 104) of the vehicle (100) according to:

$$\delta_r = \frac{m}{C_{r\alpha}} \left( \frac{v_{y,req} c_1}{v_x} + \omega_{z,req} \left( v_x + \frac{c_2}{v_x} \right) - \delta_f \frac{C_{f\alpha}}{m} \right) \qquad \text{(a)}$$

and/or

$$\delta_r = \frac{I_z}{L_r C_{r\alpha}} \left( -\frac{v_{y,req} c_3}{v_x} - \omega_{z,req} \frac{c_4}{v_x} + \delta_f \frac{L_f C_{f\alpha}}{I_z} \right) \qquad \text{(b)}$$

where $\delta_f$ is the steering angle for the front steered axle (102) $\delta_r$ is the steering angle for the rear steered axle (104), m is the mass of the vehicle (100), $v_x$ is the longitudinal velocity of the vehicle (100), $C_{f\alpha}$ is the cornering stiffness of the front steered axle (102), $C_{r\alpha}$ is the cornering stiffness of the rear steered axle (104), $L_f$ is the distance from the centre of gravity "CoG" of the vehicle (100) to the front steered axle (102), $L_r$ is the distance from the CoG of the vehicle (100) to the rear steered axle (104), $I_z$ is the yaw inertia of the vehicle (100), and $c_1$ to $c_4$ represent vehicle constants.

Example 19: The computer-implemented method (300) of example 18, comprising determining, by the processing circuitry (124, 128, 402), a first steering angle for the other steered axle (102, 104) according to equation (a), determining, by the processing circuitry (124, 128, 402), a second steering angle for the other steered axle (102, 104) according to equation (b), and determining, by the processing circuitry (124, 128, 402), a resultant steering angle $\delta_r$ for the other steered axle (102, 104) based on a weighted combination of the first steering angle and the second steering angle.

Example 20: The computer-implemented method (300) of example 18 or 19, comprising acquiring, by the processing circuitry (124, 128, 402), the steering angle for the first steered axle (102, 104) of the vehicle (100) from an autonomous driving system (122, 126) of the vehicle (100).

Example 21: The computer-implemented method (300) of any of examples 13 to 15, comprising determining (310), by the processing circuitry (124, 128, 402), a steering angle $\delta_f$ for a front steered axle (102) and a steering angle $\delta_r$ for a rear steered axle (104), according to:

$$\delta_r = \frac{m}{C_{r\alpha}} \left( \frac{v_{y,req} c_1}{v_x} + \omega_{z,req} \left( v_x + \frac{c_2}{v_x} \right) - \delta_f \frac{C_{f\alpha}}{m} \right)$$

$$\delta_r = \frac{I_z}{L_r C_{r\alpha}} \left( -\frac{v_{y,req} c_3}{v_x} - \omega_{z,req} \frac{c_4}{v_x} + \delta_f \frac{L_f C_{f\alpha}}{I_z} \right)$$

where m is the mass of the vehicle (100), $v_x$ is the longitudinal velocity of the vehicle (100), $C_{f\alpha}$ is the cornering stiffness of the front steered axle (102), $C_{r\alpha}$ is the cornering stiffness of the rear steered axle (104), $L_f$ is the distance from the centre of gravity "CoG" of the vehicle (100) to the front steered axle (102), $L_r$ is the distance from the CoG of the vehicle (100) to the rear steered axle (104), $I_z$ is the yaw inertia of the vehicle (100), and $c_1$ to $c_4$ represent vehicle constants.

Example 22: The computer-implemented method (300) of example 21, comprising determining (310), by the processing circuitry (124, 128, 402), the steering angles $\delta_f$, $\delta_r$ offline using a feedforward controller.

Example 23: The computer-implemented method (300) of any of examples 13 to 22, comprising transmitting (312) the determined steering angle to a controller (122, 126) of the vehicle (100) configured to control the steering angle of the steered axle (102, 104).

Example 24: A computer program product comprising program code for performing, when executed by processing circuitry (124, 128, 402), the computer-implemented method (300) of any of examples 13 to 23.

Example 25: A non-transitory computer-readable storage medium comprising instructions, which when executed by processing circuitry (124, 128, 402), cause the processing circuitry to perform the computer-implemented method (300) of any of examples 13 to 23.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (122, 126, 400) for determining a steering angle for a steered axle (102, 104) of a vehicle (100) having two steered axles (102, 104), the computer system (122, 126, 400) comprising processing circuitry (124, 128, 402) configured to:

   acquire a desired yaw angle of the vehicle (100) at a second location (206);
   determine a desired yaw rate $\omega_{z,req}$ for the vehicle (100) based on the desired yaw angle and a time for the vehicle (100) to travel from a first location (204) to the second location (206);
   acquire a lateral distance between the first location (204) and the second location (206);
   determine a desired lateral velocity $v_{y,req}$ for the vehicle (100) based on the lateral distance and the time for the vehicle (100) to travel from the first location (204) to the second location (206); and
   determine a steering angle for a steered axle (102, 104) of the vehicle (100) using a bicycle model and based on the desired yaw rate $\omega_{z,req}$ and the desired lateral velocity $v_{y,req}$.

2. The computer system (122, 126, 400) of claim 1, wherein the steered axle (102, 104) is a front steered axle (102) or a rear steered axle (104) of the vehicle (100).

3. The computer system (122, 126, 400) of claim 1 or 2, wherein the processing circuitry (124, 128, 402) is configured to determine the desired yaw rate $\omega_{z,req}$ and/or the desired lateral velocity $v_{y,req}$ based on steady state movement of the vehicle (100).

4. The computer system (122, 126, 400) of any preceding claim, wherein the processing circuitry (124, 128, 402) is configured to:

   acquire a current yaw rate $\omega_z$ of the vehicle (100) and/or a current lateral velocity $v_y$ of the vehicle (100); and
   determine a steering angle $\delta_f$ for a front steered axle (102) and a steering angle $\delta_r$ for a rear steered axle (104) to minimise a difference between the current yaw rate $\omega_z$ and the desired yaw rate $\omega_{z,req}$ and a difference between the current lateral velocity $v_y$ and the desired lateral velocity $v_{y,req}$.

5. The computer system (122, 126, 400) of claim 4, wherein the processing circuitry (124, 128, 402) is configured to determine the steering angles $\delta_f$, $\delta_r$ using optimal control.

6. The computer system (122, 126, 400) of any of claims 1 to 3, wherein the processing circuitry (124, 128, 402) is configured to:

acquire a steering angle for a first steered axle (102, 104) of the vehicle (100); and
determine a steering angle for the other steered axle (102, 104) of the vehicle (100) according to:

$$\delta_r = \frac{m}{C_{r\alpha}}\left(\frac{v_{y,req}c_1}{v_x} + \omega_{z,req}\left(v_x + \frac{c_2}{v_x}\right) - \delta_f\frac{C_{f\alpha}}{m}\right) \qquad \text{(a)}$$

and/or

$$\delta_r = \frac{I_z}{L_r C_{r\alpha}}\left(-\frac{v_{y,req}c_3}{v_x} - \omega_{z,req}\frac{c_4}{v_x} + \delta_f\frac{L_f C_{f\alpha}}{I_z}\right) \qquad \text{(b)}$$

where $\delta_f$ is the steering angle for the front steered axle (102) $\delta_r$ is the steering angle for the rear steered axle (104), m is the mass of the vehicle (100), $v_x$ is the longitudinal velocity of the vehicle (100), $C_{f\alpha}$ is the cornering stiffness of the front steered axle (102), $C_{r\alpha}$ is the cornering stiffness of the rear steered axle (104), $L_f$ is the distance from the centre of gravity, CoG, of the vehicle (100) to the front steered axle (102), $L_r$ is the distance from the CoG of the vehicle (100) to the rear steered axle (104), $I_z$ is the yaw inertia of the vehicle (100), and $c_1$ to $c_4$ represent vehicle constants.

7. The computer system (122, 126, 400) of claim 6, wherein the processing circuitry (124, 128, 402) is configured to determine a first steering angle for the other steered axle (102, 104) according to equation (a), determine a second steering angle for the other steered axle (102, 104) according to equation (b), and determine a resultant steering angle $\delta_r$ for the other steered axle (102, 104) based on a weighted combination of the first steering angle and the second steering angle.

8. The computer system (122, 126, 400) of claim 6 or 7, wherein the processing circuitry (124, 128, 402) is configured to acquire the steering angle for the first steered axle (102, 104) of the vehicle (100) from an autonomous driving system (122, 126) of the vehicle (100).

9. The computer system (122, 126, 400) of any of claims 1 to 3, wherein the processing circuitry (124, 128, 402) is configured to determine a steering angle $\delta_f$ for a front steered axle (102) and a steering angle $\delta_r$ for a rear steered axle (104), according to:

$$\delta_r = \frac{m}{C_{r\alpha}}\left(\frac{v_{y,req}c_1}{v_x} + \omega_{z,req}\left(v_x + \frac{c_2}{v_x}\right) - \delta_f\frac{C_{f\alpha}}{m}\right)$$

$$\delta_r = \frac{I_z}{L_r C_{r\alpha}}\left(-\frac{v_{y,req}c_3}{v_x} - \omega_{z,req}\frac{c_4}{v_x} + \delta_f\frac{L_f C_{f\alpha}}{I_z}\right)$$

where m is the mass of the vehicle (100), $v_x$ is the longitudinal velocity of the vehicle (100), $C_{f\alpha}$ is the cornering stiffness of the front steered axle (102), $C_{r\alpha}$ is the cornering stiffness of the rear steered axle (104), $L_f$ is the distance from the centre of gravity "CoG" of the vehicle (100) to the front steered axle (102), $L_r$ is the distance from the CoG of the vehicle (100) to the rear steered axle (104), $I_z$ is the yaw inertia of the vehicle (100), and $c_1$ to $c_4$ represent vehicle constants.

10. The computer system (122, 126, 400) of claim 9, wherein the processing circuitry (124, 128, 402) is configured to determine the steering angles $\delta_f$, $\delta_r$ offline using a feedforward controller.

11. The computer system (122, 126, 400) of any preceding claim, wherein the processing circuitry (124, 128, 402) is configured to transmit the determined steering angle to a controller (122, 126) of the vehicle (100) configured to control the steering angle of the steered axle (102, 104).

12. A vehicle (100) comprising the computer system (122, 126, 400) of any preceding claim.

13. A computer-implemented method (300) for determining a steering angle for a steered axle (102, 104) of a vehicle (100) having two steered axles (102, 104), the computer-implemented method (300) comprising:

acquiring (302), by processing circuitry (124, 128, 402) of a computer system (122, 126, 400), a desired yaw angle of the vehicle (100) at a second location (206);

determining (304), by the processing circuitry (124, 128, 402), a desired yaw rate $\omega_{z,req}$ for the vehicle (100) based on the desired yaw angle and a time for the vehicle (100) to travel from a first location (204) to the second location (206);

acquiring (306), by the processing circuitry (124, 128, 402), a lateral distance between the first location (204) and the second location (206);

determining (308), by the processing circuitry (124, 128, 402), a desired lateral velocity $v_{y,req}$ for the vehicle (100) based on the lateral distance and the time for the vehicle (100) to travel from the first location (204) to the second location (206); and

determining (310), by the processing circuitry (124, 128, 402), a steering angle for a steered axle (102, 104) of the vehicle (100) using a bicycle model and based on the desired yaw rate $\omega_{z,req}$ and the desired lateral velocity $v_{y,req}$.

14. A computer program product comprising program code for performing, when executed by processing circuitry (124, 128, 402), the computer-implemented method (300) of claim 13.

15. A non-transitory computer-readable storage medium comprising instructions, which when executed by processing circuitry (124, 128, 402), cause the processing circuitry to perform the computer-implemented method (300) of claim 13.

**FIG. 1**

**FIG. 2A**

**FIG. 2B**

300

Acquiring a desired yaw angle of the vehicle at a second location

302

Determining a desired yaw rate for the vehicle based on the desired yaw angle and a time for the vehicle to travel from a first location to the second location

304

Acquiring a lateral distance between the first location and the second location

306

Determining a desired lateral velocity for the vehicle based on the lateral distance and the time for the vehicle to travel from the first location to the second location

308

Determining steering angle for a steered axle of the vehicle using a bicycle model based on the desired yaw rate and the desired lateral velocity

310

Transmitting the determined steering angle to a controller of the vehicle

312

**FIG. 3**

400

404

408

412

410

416       418

402

406

414

420

422       424       426

**FIG. 4**

Europäisches
Patentamt

European
Patent Office

Office européen
des brevets

# EUROPEAN SEARCH REPORT

**Application Number**

EP 24 19 4785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/118858 A1 (FLORES DE JESUS KAREN [US] ET AL) 25 April 2019 (2019-04-25) * paragraphs [0006], [0019], [0020], [0028], [0029]; claim 1 * ----- | 1-15 | INV. B62D6/00 B62D15/02 B62D7/15 |
| A | US 2016/200360 A1 (MOSHCHUK NIKOLAI K [US] ET AL) 14 July 2016 (2016-07-14) * paragraphs [0017] - [0020] * ----- | 1-15 | |

**TECHNICAL FIELDS SEARCHED (IPC)**

B62D

The present search report has been drawn up for all claims

| Place of search | Date of completion of the search | Examiner |
|---|---|---|
| The Hague | 21 January 2025 | Areal Calama, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4785

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | Publication date | Patent family member(s) | Publication date |
|---|---|---|---|
| US 2019118858 A1 | 25-04-2019 | US 2019118858 A1<br>WO 2019083806 A1 | 25-04-2019<br>02-05-2019 |
| US 2016200360 A1 | 14-07-2016 | CN 105774905 A<br>DE 102016100102 A1<br>US 2016200360 A1 | 20-07-2016<br>14-07-2016<br>14-07-2016 |

EPO FORM P0459

For more details about this annex : see Official Journal of the European Patent Office, No. 12/82